# EUROPEAN PATENT APPLICATION

(11) **EP 4 209 372 A1**
(43) Date of publication of application: **12.07.2023**
(21) Application number: 21852485.8
(22) Date of filing: 05.08.2021
(51) Int. Cl.: B60K 11/08

(54) **ACTIVE AIR INTAKE GRILLE ASSEMBLY AND VEHICLE FRONT-END MODULE**

(30) Priority: 07.08.2020 CN 202010787670
(71) Applicant: Guangzhou Valeo Engine Cooling Co., Ltd., Guangzhou, Guangdong 510760 (CN)
(72) Inventor: ZHONG, Jin, Guangzhou, Guangdong 510760 (CN); FANG, Haiyan, Guangdong 510760 (CN)
(74) Representative: Valeo Systèmes Thermiques
(86) International application number: PCT/CN2021/110797
(87) International publication number: WO 2022/028516

(57) **Abstract**

An active air intake grille assembly, comprising: a main frame (1); a vane (2) and a vane connection portion (21), with the vane connection portion (21) being configured deviating from a vane rotation axis (A-A), and the vane (2) being configured such that same can rotate in a first rotation direction (S1) from a first vane position (B1) to a second vane position (B2), so as to adjust an airflow passing through an air port (1a); a connecting rod (3) having a first connecting rod wall (3a); and a driving assembly (4) mounted on the main frame (1) and used for driving the connecting rod (3) to move relative to the main frame (1) in a first translation direction (T1), such that the first connecting rod wall (3a) pushes the vane connection portion (21) so as to drive the vane (2) to rotate in the first rotation direction (S1), wherein during the process of the vane (2) rotating in the first rotation direction (S1) from the first vane position (B1) to the second vane position (B2), the vane connection portion (21) slides on the first connecting rod wall (3a) from a first connecting rod position (R1) to a second connecting rod position (R2). In the active air intake grille assembly, the vane (2) can be driven to rotate merely by the translational movement of the connecting rod (3) relative to the main frame (1), such that the movement space needed by the connecting rod (3) is small, and the active air intake grille assembly has the advantage of having a compact structure. A vehicle front-end module comprising the active air intake grille assembly is also provided.

## Description

### FIELD OF THE INVENTION

The present invention relates to an active air intake grille assembly and a vehicle front-end module equipped with the active air intake grille assembly.

### BACKGROUND

A vehicle front-end module, or FEM for short, is a system part that integrates vehicle front-end components. The vehicle front-end module integrates parts such as a cabin lock, a radiator, a condenser, an intercooler, an anti-collision beam, a buffer stopper, a sensor, a headlight, a bumper and even a fender by means of a special framework.

The vehicle front-end module further comprises an active air intake grille, which can change the opening and closing of the active air intake grille to control the air intake volume and wind resistance, so as to improve the fuel economy and quickly reach a better engine operating temperature.

At present, as described in Chinese utility model patent CN 205059747 U, the transmission of an active air intake grille in the prior art is achieved based on the principle of a four-bar linkage mechanism, with a vane being hinged to a connecting rod to form a part of the four-bar linkage mechanism.

The transmission solution based on the principle of a four-bar linkage mechanism results in a large movement space required by a transmission mechanism, resulting in a non-compact structure of the active air intake grille.

### SUMMARY

An objective of the present invention is to provide an active air intake grille assembly, which has the advantage of having a compact structure.

The objective of the present invention is further to provide a vehicle front-end module comprising the active air intake grille assembly mentioned above.

In order to achieve the objective, the active air intake grille assembly comprises a main frame having an air port that allows an airflow to pass through; a vane having a vane rotation axis and a vane connection portion, with the vane connection portion being configured deviating from the vane rotation axis, the vane being rotatably arranged on the main frame in the vane rotation axis, and the vane being configured to be able to rotate in a first rotation direction from a first vane position to a second vane position, so as to adjust the airflow passing through the air port; a connecting rod having a first connecting rod wall; and a driving assembly mounted on the main frame and used for driving the connecting rod to move relative to the main frame in a first translation direction, such that the first connecting rod wall pushes the vane connection portion so as to drive the vane to rotate in the first rotation direction, wherein during the process of the vane rotating in the first rotation direction from the first vane position to the second vane position, the vane connection portion slides on the first connecting rod wall from a first connecting rod position to a second connecting rod position.

In an embodiment, the connecting rod further has a second connecting rod wall; and the driving assembly is used for driving the connecting rod to move relative to the main frame in a second translation direction, such that the second connecting rod wall pushes the vane connection portion so as to drive the vane to rotate in a second rotation direction, with the second rotation direction being opposite to the first rotation direction, and the second translation direction being opposite to the first translation direction; and during the process of the vane rotating in the second rotation direction from the second vane position to the first vane position, the vane connection portion slides on the second connecting rod wall from a third connecting rod position to a fourth connecting rod position.

In an embodiment, the first connecting rod wall and the second connecting rod wall are arranged facing each other, and the vane connection portion is arranged between the first connecting rod wall and the second connecting rod wall.

In an embodiment, sliding directions of the vane connection portion on the connecting rod are perpendicular to translation directions of the connecting rod relative to the main frame.

In an embodiment, translation directions of the connecting rod relative to the main frame are parallel to the main frame.

In an embodiment, the driving assembly comprises a rotating member; and the connecting rod has a third connecting rod wall; the rotating member has a rotating member axis and a rotating member connection portion, with the rotating member connection portion being configured deviating from the rotating member axis, and the rotating member connection portion being used for pushing the third connecting rod wall to move the connecting rod relative to the main frame in the first translation direction, wherein during the process of the connecting rod moving in the first translation direction from a first frame position to a second frame position, the rotating member connection portion slides on the third connecting rod wall from a fifth connecting rod position to a sixth connecting rod position.

In an embodiment, the connecting rod has a fourth connecting rod wall; the rotating member connection portion is used for pushing the fourth connecting rod wall to move the connecting rod relative to the main frame in the second translation direction, with the second translation direction being opposite to the first translation direction; and during the process of the connecting rod moving in the second translation direction from the second frame position to the first frame position, the rotating member connection portion slides on the fourth connecting rod wall from a seventh connecting rod position to an eighth connecting rod position.

In an embodiment, the third connecting rod wall and the fourth connecting rod wall are arranged facing each other, and the rotating member connection portion is located between the third connecting rod wall and the fourth connecting rod wall.

In an embodiment, sliding directions of the rotating member connection portion on the connecting rod are perpendicular to translation directions of the connecting rod relative to the main frame.

In an embodiment, during the process of the vane rotating in the first rotation direction from the first vane position to the second vane position, the vane connection portion slides on the first connecting rod wall from the first connecting rod position to a first middle position, and turns back at the first middle position and then slides to the second connecting rod position.

In an embodiment, during the process of the connecting rod moving in the first translation direction from the first frame position to the second frame position, the rotating member connection portion slides on the third connecting rod wall from the fifth connecting rod position to a second middle position, and turns back at the second middle position and then slides to the sixth connecting rod position.

In an embodiment, the rotating member connection portion and the vane connection portion are respectively arranged on two sides of the connecting rod.

In order to achieve the objective, the vehicle front-end module comprises the active air intake grille assembly as described above.

The present invention has a positive improvement effect in that the translational movement of the connecting rod of the active air intake grille assembly relative to the main frame can drive the vane to rotate, so the connecting rod requires less space for movement, and thus the active air intake grille assembly provided in the present invention has the advantage of having a compact structure. The vehicle front-end module provided in the present invention comprises the active air intake grille assembly.

### BRIEF DESCRIPTION OF THE DRAWINGS

The above and other features, properties and advantages of the present invention will become more apparent from the following descriptions in conjunction with the accompanying drawings and embodiments. In the figures:
Fig. 1A is a schematic diagram of an active air intake grille assembly, showing the rear side of the active air intake grille assembly;
Fig. 1B is a schematic diagram of the active air intake grille assembly, showing the top of the active air intake grille assembly;
Fig. 2 is a schematic diagram of part of the active air intake grille assembly, showing a frame body and a cover;
Fig. 3 is an exploded view of Fig. 2;
Fig. 4 is a schematic diagram of a vane and a connecting rod, showing the inner side of the connecting rod;
Fig. 5 is an enlarged view of part D in Fig. 4;
Fig. 6 is a schematic diagram of the vane and the connecting rod connected to each other, showing the outer side of the connecting rod;
Fig. 7 is an enlarged view of part E in Fig. 6;
Fig. 8 is a schematic diagram of the connecting rod, showing the inner side of the connecting rod;
Fig. 9 is an enlarged view of part F in Fig. 8;
Fig. 10 is a schematic diagram of a rotating member, the connecting rod and the vane, showing the inner side of the connecting rod;
Fig. 11 is an enlarged view of part G in Fig. 10;
Fig. 12 is a schematic diagram of the frame body and the connecting rod, with the connecting rod being arranged in a cavity of the frame body;
Fig. 13 is a schematic diagram of the frame body, showing the cavity;
Fig. 14A is a cross-sectional view in direction H-H in Fig. 2, with the cover being hidden;
Fig. 14B is a perspective view of Fig. 14A;
Fig. 15 is an enlarged view of part J in Fig. 14B;
Fig. 16A is an enlarged view of part K in Fig. 14A, with the vane being in a first vane position, a vane connection portion being in a first connecting rod position, the connecting rod being in a first frame position, and a rotating member connection portion being in a fifth connecting rod position;
Fig. 16B is a schematic diagram of the vane rotating in a first direction from the first vane position to a second vane position, with the vane connection portion sliding to a second connecting rod position, the connecting rod moving to a second frame position, and the rotating member connection portion sliding to a sixth connecting rod position;
Fig. 17A is a schematic diagram of the vane in the second vane position, with the vane connection portion being in a third connecting rod position, the connecting rod being in the second frame position, and the rotating member connection portion being in a seventh connecting rod position;
Fig. 17B is a schematic diagram of the vane rotating in a second direction from the second vane position to the first vane position, with the vane connection portion sliding to a fourth connecting rod position, the connecting rod moving to the first frame position, and the rotating member connection portion sliding to an eighth connecting rod position;
Fig. 18A is a schematic diagram of the vane rotating in the first direction from the first vane position to the second vane position, with the first connecting rod position coinciding with the second connecting rod position, and the fifth connecting rod position coinciding with the sixth connecting rod position; and
Fig. 18B is a schematic diagram of the vane rotating in the second direction from the second vane position to the first vane position, with the third connecting rod position coinciding with the fourth connecting rod position, and the seventh connecting rod position coinciding with the eighth connecting rod position.

### DETAILED DESCRIPTION

Various different implementations or embodiments of the subject technical solutions implemented will be disclosed below. To simplify the disclosure, specific examples of elements and arrangements are described below, which are, of course, only examples and are not intended to limit the scope of protection of the present invention. For example, the distribution of a first feature in a second feature described later in the specification may include an implementation in which the first feature and the second feature are distributed in a direct relation, or may include an implementation in which an additional feature is formed between the first feature and the second feature such that the first feature and the second feature may not be in direct relation. In addition, the reference signs and/or letters may be repeated in different examples in the contents. This repetition is for brevity and clarity, and does not in itself indicate a relationship between the implementations and/or the structures to be discussed. Further, when a first element is described as being connected or combined with a second element, the description includes an implementation in which the first element and the second element are directly connected or combined with each other, and also includes an implementation in which one or more other involved elements are added such that the first element and the second element are indirectly connected or combined with each other.

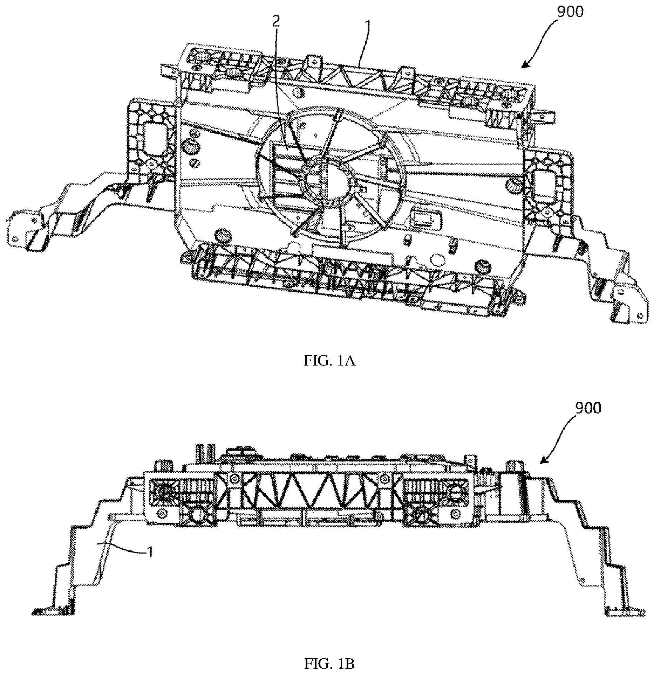

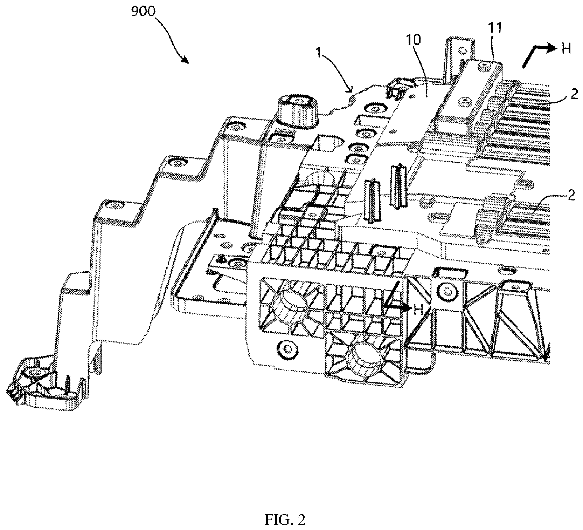

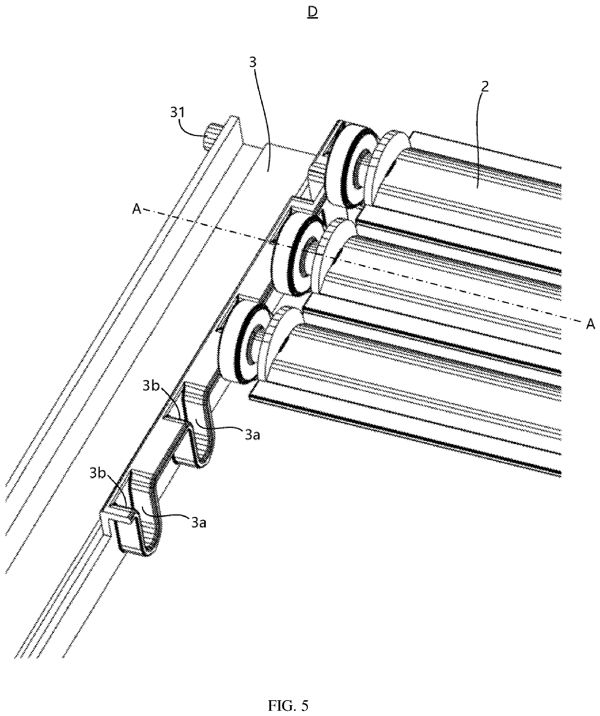

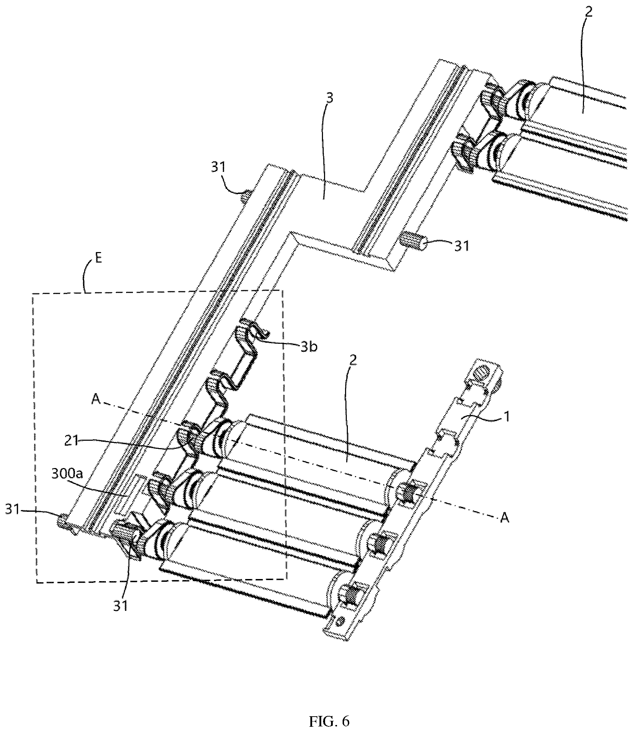

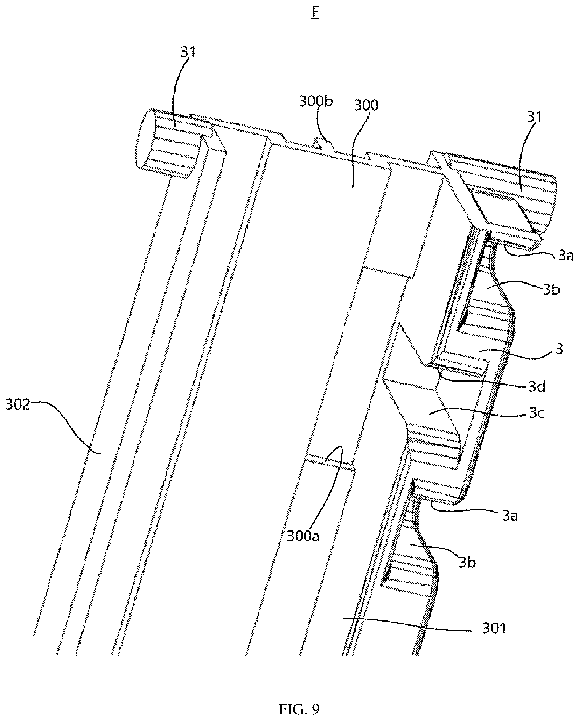

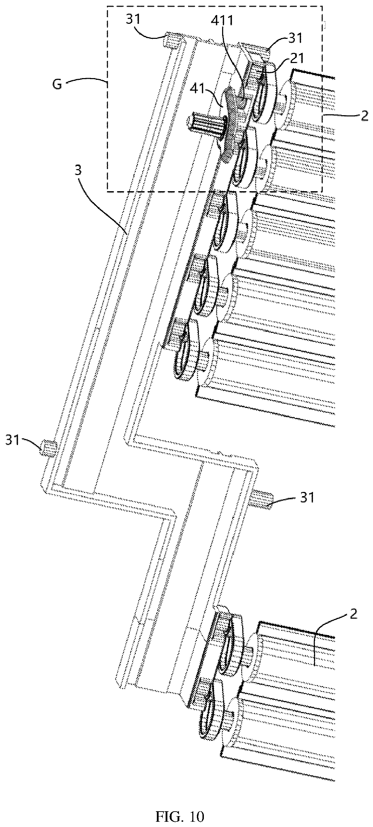

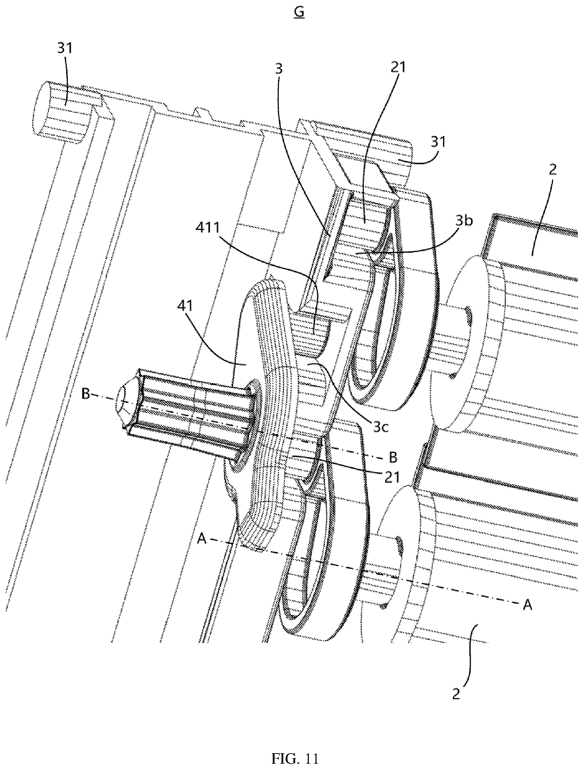

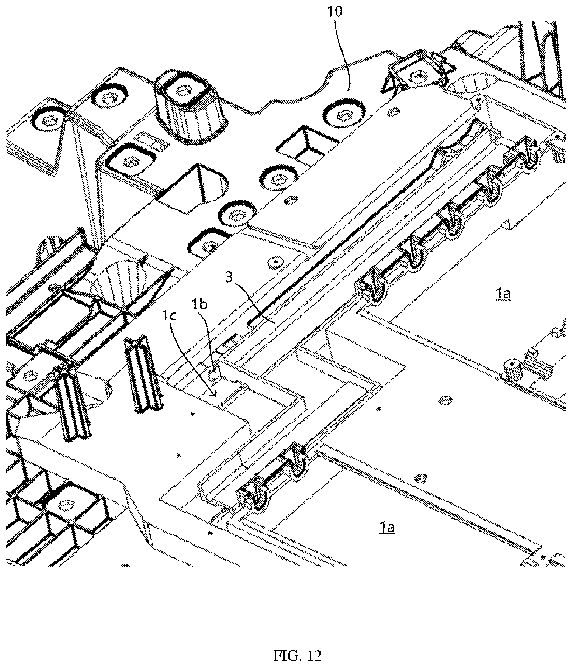

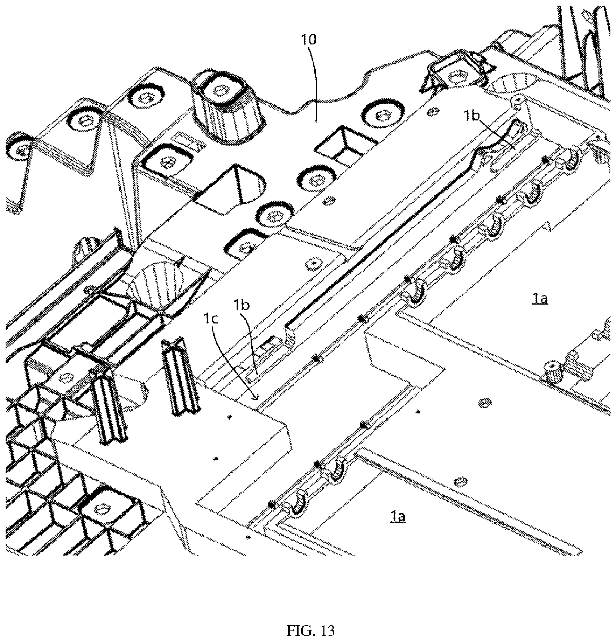

It should be noted that Figs. 1 to 18B are only examples, which are not drawn to scale, and should not be taken as limiting the scope of protection actually claimed by the present invention.

A vehicle front-end module, or FEM for short, is a system part that integrates vehicle front-end components. The vehicle front-end module integrates parts such as a cabin lock, a radiator, a condenser, an intercooler, an anti-collision beam, a buffer stopper, a sensor, a headlight, a bumper and even a fender by means of a special framework.

The vehicle front-end module further comprises an active air intake grille, which can change the opening and closing of the active air intake grille to control the air intake volume and wind resistance, so as to improve the fuel economy and quickly reach a better engine operating temperature.

As shown in Figs. 1A, 1B, 2 and 3, an active air intake grille 900 comprises a main frame 1, a vane 2, a connecting rod 3, and a driving assembly 4.

The main frame 1 comprises a frame body 10 and a cover 11. The frame body 10 has an air port 1a that allows an airflow to pass through. Multiple air ports 1a may be provided as required, and correspondingly, the vanes 2 may be provided as multiple vane groups respectively arranged in the multiple air ports 1a. The driving assembly 4 is mounted on the main frame 1.

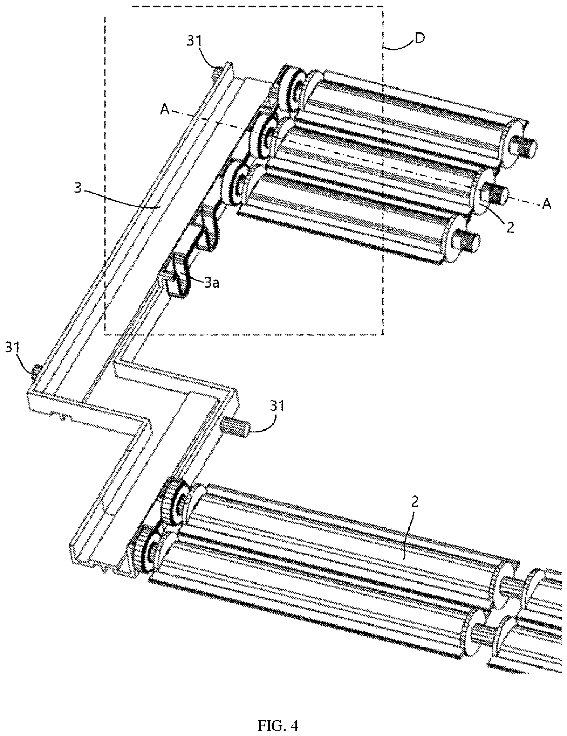

As shown in Figs. 4, 5, 6 and 7, the vane 2 has a vane rotation axis A-A and a vane connection portion 21, the vane connection portion 21 being configured deviating from the vane rotation axis A-A, and the vane 2 being rotatably arranged on the main frame 1 along the vane rotation axis A-A. The driving assembly 4 is used for driving the connecting rod 3, such that the connecting rod 3 drives the vane 2 to rotate.

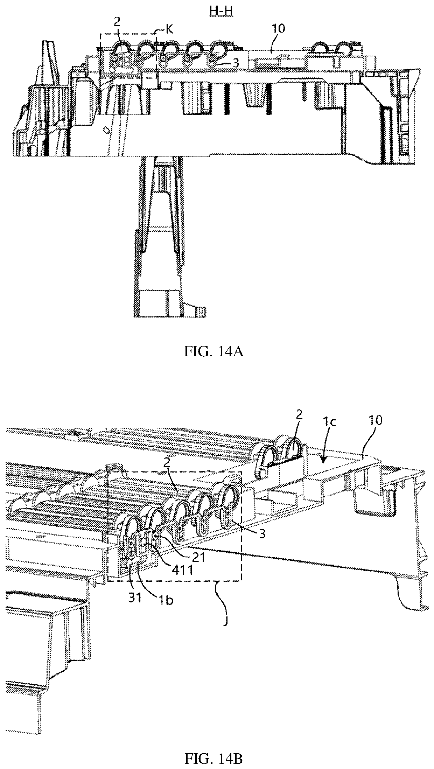

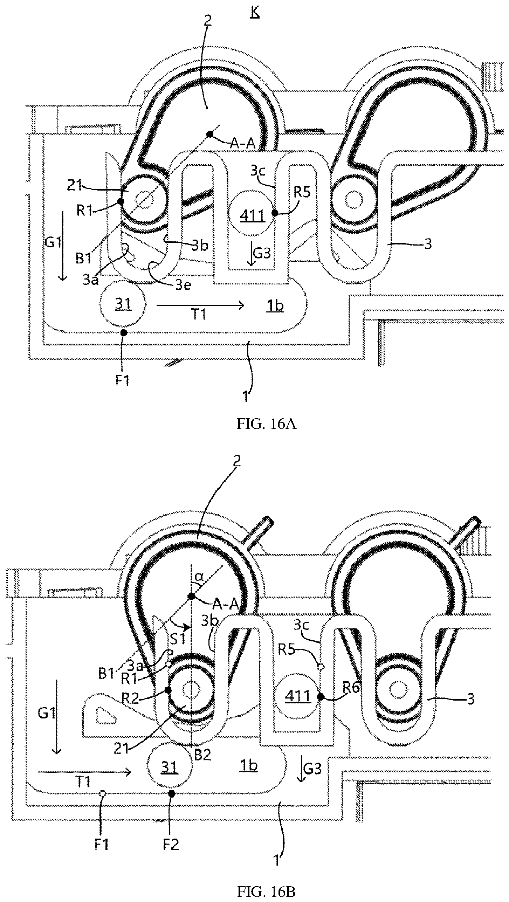

Referring to Figs. 14A, 14B, 15, 16A and 16B, the vane 2 is configured to be able to rotate in a first rotation direction S1 from a first vane position B1 to a second vane position B2 so as to adjust the airflow passing through the air port 1a. In Figs. 14, 14B, 15 and 16A, the vane 2 is located in the first vane position B1, and the first vane position B1 is also referred to as a closed position or a 0° position. In an embodiment not shown, the first vane position B1 may also be a position other than the 0° position. In the 0° position, the air port 1a is closed by the vane 2. In Fig. 16B, the vane 2 is in the second vane position B2. Specifically, the vane 2 is rotated by an angle α in the first rotation direction S1 from the first vane position B1 to reach the second vane position B2. In Fig. 16B, the angle α is 45°, and thus the second vane position B2 is also referred to as a 45° position. In an embodiment not shown, the second vane position B2 may also be a position other than the 0° position.

As shown in Figs. 4, 5, 6, 7, 15, 16A, and 16B, the connecting rod 3 has a first connecting rod wall 3a; the driving assembly 4 drives the connecting rod 3 to move relative to the main frame 1 in a first translation direction T1, such that the first connecting rod wall 3a pushes the vane connection portion 21 so as to drive the vane 2 to rotate in the first rotation direction S1; and during the process of the vane 2 rotating in the first rotation direction S1 from the first vane position B1 to the second vane position B2, the vane connection portion 21 slides on the first connecting rod wall 3a in a first sliding direction G1 from a first connecting rod position R1 to a second connecting rod position R2. In Fig. 16A, the vane 2 is in the first vane position B1, the vane connection portion 21 is located in the first connecting rod position R1, and the connecting rod 3 is located in a first frame position F1. In Fig. 16B, the vane 2 is in the second vane position B2, the vane connection portion 21 slides to the second connecting rod position R2, and the connecting rod 3 is located in a second frame position F2.

In the embodiment described above, the translational movement of the connecting rod 3 relative to the main frame 1 can drive the vane 2 to rotate, so the connecting rod 3 requires less space for movement, and thus the active air intake grille assembly provided in the present invention has the advantage of having a compact structure.

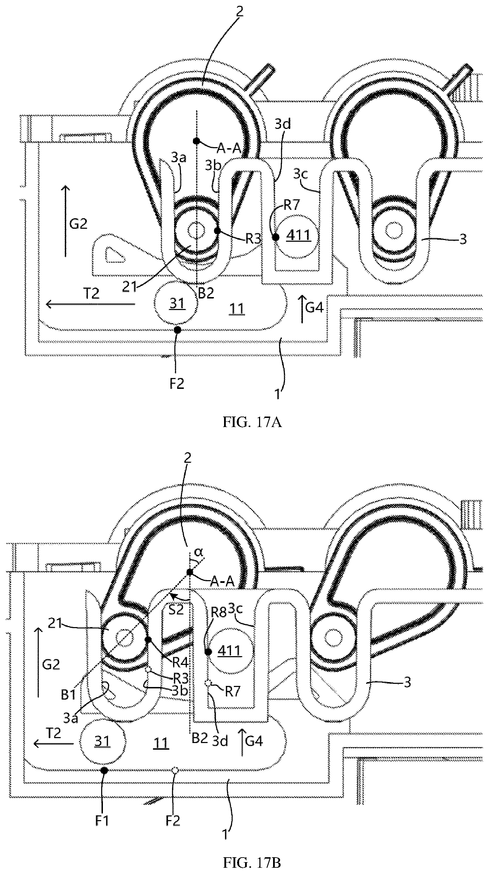

As shown in Figs. 17A and 17B, the connecting rod 3 further has a second connecting rod wall 3b; the driving assembly 4 is used for driving the connecting rod 3 to move relative to the main frame 1 in a second translation direction T2, such that the second connecting rod wall 3b pushes the vane connection portion 21 so as to drive the vane 2 to rotate in a second rotation direction S2, with the second rotation direction S2 being opposite to the first rotation direction S1, and the second translation direction T2 being opposite to the first translation direction T1; and during the process of the vane 2 rotating in the second rotation direction S2 from the second vane position B2 to the first vane position B1, the vane connection portion 21 slides on the second connecting rod wall 3b in a second sliding direction G2 from a third connecting rod position R3 to a fourth connecting rod position R4, with the second sliding direction G2 being opposite to the first sliding direction G1.

In Fig. 17B, the angle α is 45°, the second vane position B2 is the 45° position, and the first vane position B1 is the 0° position. In an embodiment not shown, the angle α may also be of other sizes, and the first vane position B1 and the second vane position B2 may also be other positions.

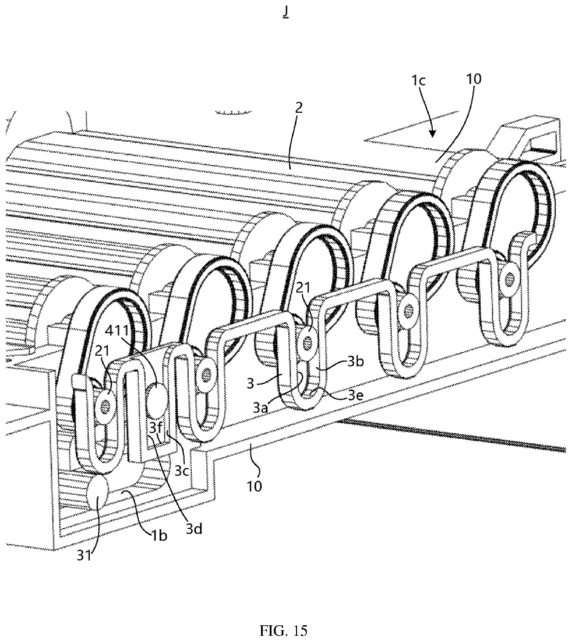

As can be seen in view of Figs. 16B and 17B, the first connecting rod wall 3a and the second connecting rod wall 3b are arranged in parallel and facing each other, and the vane connection portion 21 is arranged between the first connecting rod wall 3a and the second connecting rod wall 3b. More specifically, the vane connection portion 21 has a cylindrical shape, and the diameter of the vane connection portion 21 is equal to the distance between the first connecting rod wall 3a and the second connecting rod wall 3b parallel to each other. As shown in Fig. 15, the first connecting rod wall 3a may be connected to the second connecting rod wall 3b via a circular arc-shaped face 3e. In an embodiment not shown, the first connecting rod wall 3a and the second connecting rod wall 3b may also not be parallel.

With continued reference to Figs. 16A, 16B, 17A and 17B, the sliding directions G1, G2 of the vane connection portion 21 on the connecting rod 3 are perpendicular to the translation directions T1, T2 of the connecting rod 3 relative to the main frame 1.

With continued reference to Figs. 16A, 16B, 17A and 17B, the translation directions T1, T2 of the connecting rod 3 relative to the main frame 1 are parallel to the main frame 1. Such a design prevents the connecting rod 3 from moving in a direction perpendicular to the main frame 1 during the movement.

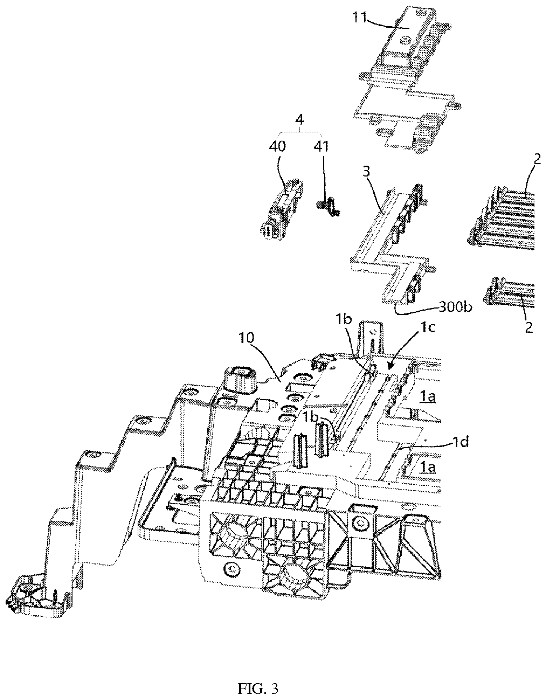

The translational movement of the connecting rod 3 relative to the main frame 1 can be achieved in various ways. As shown in Figs. 3, 12, 13, 14B, 15, 16A, 16B, 17A and 17B, the connecting rod 3 is in sliding-fit with the main frame 1. More specifically, the connecting rod 3 has a sliding portion 31; the main frame 1 has a sliding slot 1b; and the sliding portion 31 may be slidably arranged in the sliding slot 1b in a translation manner. The extension direction of the sliding slot 1b is consistent with the translation directions T1, T2 of the connecting rod 3 relative to the main frame 1. In an embodiment not shown, the connecting rod 3 may be directly connected to the driving assembly 4 without sliding-fit with the main frame 1, and may be driven by the driving assembly 4 to translate relative to the main frame 1.

There are various implementations for the driving assembly 4 to drive the connecting rod 3 to move. In an embodiment not shown, the driving assembly 4 may comprise a gear and a rack. The rack is connected to the connecting rod 3, and the gear drives the rack to move so as to drive the connecting rod to move.

In an alternative embodiment, as shown in Figs. 16A and 16B, the driving assembly 4 comprises a base 40 and a rotating member 41. The base 40 has an electric motor that drives the rotating member 41 to rotate along a rotating member axis B-B. The base 40 is mounted on the main frame 1. The connecting rod 3 has a third connecting rod wall 3c. The rotating member 41 has the rotating member axis B-B and a rotating member connection portion 411, the rotating member connection portion 411 being configured deviating from the rotating member axis B-B, the rotating member 41 being rotatably arranged on the base 40 along the rotating member axis B-B, and the rotating member connection portion 411 being used for pushing the third connecting rod wall 3c to move the connecting rod 3 relative to the main frame 1 in the first translation direction T1, wherein during the process of the connecting rod 3 moving relative to the main frame 1 in the first translation direction T1 from the first frame position F1 to the second frame position F2, the rotating member connection portion 411 slides on the third connecting rod wall 3c in a third sliding direction G3 from a fifth connecting rod position R5 to a sixth connecting rod position R6. Such a design has the advantage of having a simple structure.

As shown in Figs. 17A and 17B, the connecting rod 3 has a fourth connecting rod wall 3d; and the rotating member connection portion 411 is used for pushing the fourth connecting rod wall 3d to move the connecting rod 3 relative to the main frame 1 in the second translation direction T2, with the second translation direction T2 being opposite to the first translation direction T1; and during the process of the connecting rod 3 moving in the second translation direction T2 from the second frame position F2 to the first frame position F1, the rotating member connection portion 411 slides on the fourth connecting rod wall 3d in a fourth sliding direction G4 from a seventh connecting rod position R7 to an eighth connecting rod position R8.

With continued reference to Figs. 17A and 17B, the third connecting rod wall 3c and the fourth connecting rod wall 3d are arranged in parallel and facing each other, and the rotating member connection portion 411 is located between the third connecting rod wall 3c and the fourth connecting rod wall 3d. The sliding directions G3, G4 of the rotating member connection portion 411 on the connecting rod 3 are perpendicular to the translation directions T1, T2 of the connecting rod 3 relative to the main frame 1. More specifically, the rotating member connection portion 411 has a cylindrical shape, and the diameter of the rotating member connection portion 411 is equal to the distance between the third connecting rod wall 3c and the fourth connecting rod wall 3d parallel to each other. The diameter of the rotating member connection portion 411 is equal to the diameter of the vane connection portion 21. In an embodiment not shown, the third connecting rod wall 3c and the fourth connecting rod wall 3d may also not be parallel. As shown in Fig. 15, the third connecting rod wall 3c may be connected to the fourth connecting rod wall 3d via a flat face 3f.

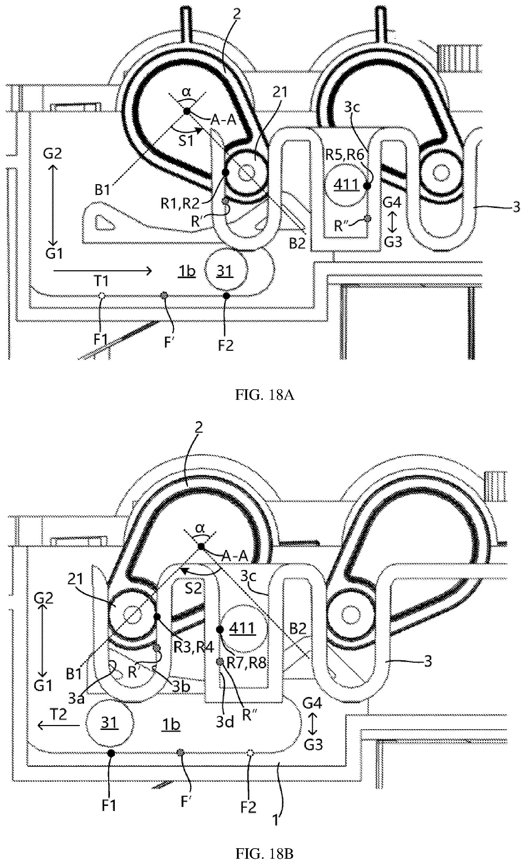

In Fig. 18A, the vane 2 is rotated by an angle α in the first rotation direction S1 from the first vane position B1 to reach the second vane position B2. In Fig. 18A, the angle α is 90°, and the second vane position B2 is also referred to as a 90° position. In this embodiment, the first vane position B1 is the 0° position.

When the vane 2 is rotated from the 0° position to the 45° position, the vane connection portion 21 slides in the first sliding direction G1 from the first connecting rod position R1 to a first middle position R', the rotating member connection portion 411 slides in the third sliding direction G3 from the fifth connecting rod position R5 to a second middle position R", and the connecting rod 3 moves in the first translation direction T1 from the first frame position F1 to a frame middle position F'.

When the vane 2 continues to rotate from the 45° position to the 90° position, the vane connection portion 21 slides in the second sliding direction G2 from the first middle position R' to the second connecting rod position R2, the rotating member connection portion 411 slides in the fourth sliding direction G4 from the second middle position R" to the sixth connecting rod position R6, and the connecting rod 3 moves in the first translation direction T1 from the frame middle position F' to the second frame position F2. In this embodiment, the first connecting rod position R1 coincides with the second connecting rod position R2, and the fifth connecting rod position R5 coincides with the sixth connecting rod position R6.

In Fig. 18A, the first sliding direction G1 is in the same direction as the third sliding direction G3. The first sliding direction G1 is opposite to the second sliding direction G2. The third sliding direction G3 is opposite to the fourth sliding direction G4.

In Fig. 18B, the vane 2 is rotated by an angle α in the second rotation direction S2 from the second vane position B2 to reach the first vane position B1. In Fig. 18B, the angle α is 90°, and the second vane position B2 is also referred to as the 90° position. In this embodiment, the first vane position B1 is the 0° position.

When the vane 2 is rotated from the 90° position to the 45° position, the vane connection portion 21 slides in the first sliding direction G1 from the third connecting rod position R3 to the first middle position R', the rotating member connection portion 411 slides in the third sliding direction G3 from the seventh connecting rod position R7 to the second middle position R", and the connecting rod 3 moves in the second translation direction T2 from the second frame position F1 to the frame middle position F'.

When the vane 2 continues to rotate from the 45° position to the 0° position, the vane connection portion 21 slides in the second sliding direction G2 from the first middle position R' to the fourth connecting rod position R4, the rotating member connection portion 411 slides in the fourth sliding direction G4 from the second middle position R" to the eighth connecting rod position R8, and the connecting rod 3 moves in the second translation direction T2 from the frame middle position F' to the first frame position F1. In this embodiment, the third connecting rod position R3 coincides with the fourth connecting rod position R4, and the seventh connecting rod position R7 coincides with the eighth connecting rod position R8.

In Fig. 18B, the first sliding direction G1 is the same as the third sliding direction G3. The first sliding direction G1 is opposite to the second sliding direction G2. The third sliding direction G3 is opposite to the fourth sliding direction G4.

In view of Figs. 18A and 18B, the first translation direction T1 is opposite to the second translation direction T2.

In the embodiment described above, the vane connection portion 21 turns back when sliding to the first middle position R', and the rotating member connection portion 411 turns back when sliding to the second middle position R".

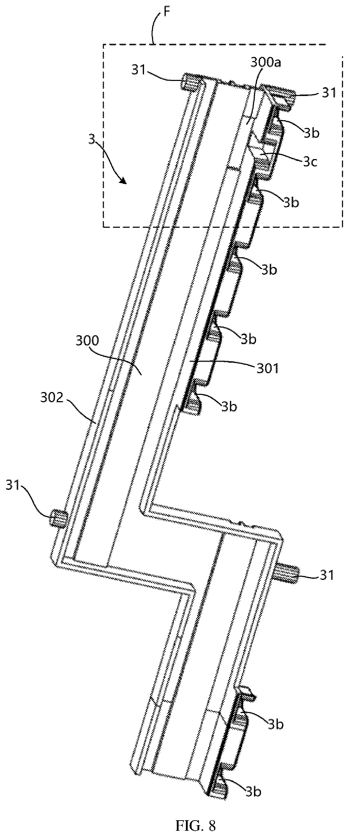

As shown in Figs. 8, 9, 10 and 11, the rotating member axis B-B is parallel to the vane rotation axis A-A. The rotating member connection portion 411 and the vane connection portion 21 are respectively arranged on two sides of the connecting rod 3. Such a design makes the structure compact.

Specifically, the connecting rod 3 has a side wall. The first connecting rod wall 3a and the second connecting rod wall 3b are located on one side, such as the outer side, of the side wall, and the third connecting rod wall 3c and the fourth connecting rod wall 3d are located on the other side, such as the inner side, of this side wall. The sliding portion 31 is connected to the side wall and located on the outer side of the side wall. The rotating member connection portion 411 and the vane connection portion 21 are respectively arranged on two sides of the side wall of the connecting rod 3.

More specifically, the connecting rod 3 has a first side wall 301, a second side wall 302, and a bottom wall 300. One side of the first side wall 301 is recessed to form the first connecting rod wall 3a and the second connecting rod wall 3b, and the other side of the second side wall 302 is recessed to form the third connecting rod wall 3c and the fourth connecting rod wall 3d.

The first side wall 301 and the second side wall 302 are connected to two opposite edges of the bottom wall 300 and extend toward the same side of the bottom wall 300. The bottom wall 300 is provided with a through hole 300a. The through hole 300a has an avoidance function to the rotating member 41.

As shown in Figs. 3, 12 and 13, the main frame 1 also has a cavity 1c, and the connecting rod 3 is arranged in the cavity 1c in a translation manner. Since the connecting rod 3 is configured translating relative to the main frame 1, the depth of the cavity 1c can be controlled.

The main frame 1 comprises a frame body 10 and a cover 11, the frame body 10 having the air port 1a and the cavity 1c, and the cover 11 being connected to the frame body 10 to close the cavity 1c. The driving assembly 4 is arranged between the frame body 10 and the cover 11, with the driving assembly 4 being fixed to an inner wall of the cover 11. More specifically, the base 40 is fixed to the inner wall of the cover 11.

As shown in Fig. 4, the shape of the connecting rod 3 may be in a curved shape according to the position of the vane 2, and correspondingly, the cavity 1c is also in a curved shape. The sliding slot 1b can be located in the cavity 1c.

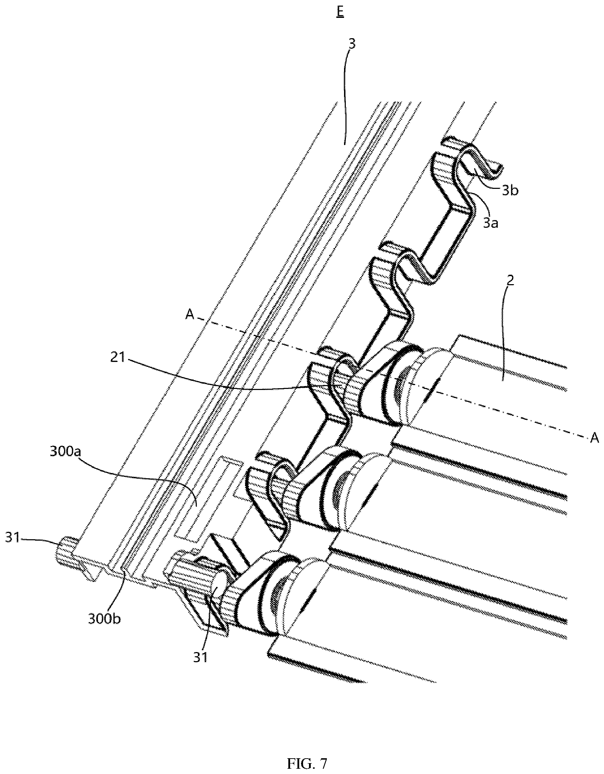

As shown in Figs. 3 and 7, the outer side of the bottom wall 300 of the connecting rod 3 is provided with a rib 300b, the bottom face of the cavity 1c is provided with a guide slot 1d, and the rib 300b is in sliding-fit with the guide slot 1d. The extension direction of the guide slot 1d is consistent with the moving direction of the connecting rod 3.

Although the present invention is disclosed with the preferred embodiments as described above, they are not intended to limit the present invention, and any person skilled in the art would have made possible changes and amendments without departing from the spirit and scope of the present invention, and the amendments, equivalent changes and modifications to the above embodiments based on the technical essence of the present invention, without departing from the technical solutions of the present invention, all fall within the scope of protection defined by the claims of the present invention.

## Claims

1. An active air intake grille assembly, comprising
a main frame (1) having an air port (1a) that allows an airflow to pass through;
a vane (2) having a vane rotation axis (A-A) and a vane connection portion (21), with the vane connection portion (21) being configured deviating from a vane rotation axis (A-A), the vane (2) being rotatably arranged on the main frame (1) along the vane rotation axis (A-A), and the vane (2) being configured to be able to rotate in a first rotation direction (S1) from a first vane position (B1) to a second vane position (B2), so as to adjust the airflow passing through the air port (1a);
a connecting rod (3) having a first connecting rod wall (3a); and
a driving assembly (4) mounted on the main frame (1) and used for driving the connecting rod (3) to move relative to the main frame (1) in a first translation direction (T1), such that the first connecting rod wall (3a) pushes the vane connection portion (21) so as to drive the vane (2) to rotate in the first rotation direction (S1),
wherein during the process of the vane (2) rotating in the first rotation direction (S1) from the first vane position (B1) to the second vane position (B2), the vane connection portion (21) slides on the first connecting rod wall (3a) from a first connecting rod position (R1) to a second connecting rod position (R2).

2. The active air intake grille assembly as claimed in claim 1, wherein the connecting rod (3) further has a second connecting rod wall (3b); and the driving assembly (4) is used for driving the connecting rod (3) to move relative to the main frame (1) in a second translation direction (T2), such that the second connecting rod wall (3b) pushes the vane connection portion (21) so as to drive the vane (2) to rotate in a second rotation direction (S2), with the second rotation direction (S2) being opposite to the first rotation direction (S1), and the second translation direction (T2) being opposite to the first translation direction (T1); and
during the process of the vane (2) rotating in the second rotation direction (S2) from the second vane position (B2) to the first vane position (B1), the vane connection portion (21) slides on the second connecting rod wall (3b) from a third connecting rod position (R3) to a fourth connecting rod position (R4).

3. The active air intake grille assembly as claimed in claim 2, wherein the first connecting rod wall (3a) and the second connecting rod wall (3b) are arranged facing each other, and the vane connection portion (21) is arranged between the first connecting rod wall (3a) and the second connecting rod wall (3b).

4. The active air intake grille assembly as claimed in claim 1, wherein sliding directions (G1, G2) of the vane connection portion (21) on the connecting rod (3) are perpendicular to translation directions (T1, T2) of the connecting rod (3) relative to the main frame (1).

5. The active air intake grille assembly as claimed in claim 1, wherein translation directions (T1, T2) of the connecting rod (3) relative to the main frame (1) are parallel to the main frame (1).

6. The active air intake grille assembly as claimed in claim 1, wherein the driving assembly (4) comprises a rotating member (41), and the connecting rod (3) has a third connecting rod wall (3c);
the rotating member (41) has a rotating member axis (B-B) and a rotating member connection portion (411), with the rotating member connection portion (411) being configured deviating from the rotating member axis (B-B); and
the rotating member connection portion (411) is used for pushing the third connecting rod wall (3c) to move the connecting rod (3) relative to the main frame (1) in the first translation direction (T1),
wherein during the process of the connecting rod (3) moving in the first translation direction (T1) from a first frame position (F1) to a second frame position (F2), the rotating member connection portion (411) slides on the third connecting rod wall (3c) from a fifth connecting rod position (R5) to a sixth connecting rod position (R6).

7. The active air intake grille assembly as claimed in claim 6, wherein the connecting rod (3) has a fourth connecting rod wall (3d);
the rotating member connection portion (411) is used for pushing the fourth connecting rod wall (3d) to move the connecting rod (3) relative to the main frame (1) in the second translation direction (T2), with the second translation direction (T2) being opposite to the first translation direction (T1); and
during the process of the connecting rod (3) moving in the second translation direction (T2) from the second frame position (F2) to the first frame position (F1), the rotating member connection portion (411) slides on the fourth connecting rod wall (3d) from a seventh connecting rod position (R7) to an eighth connecting rod position (R8).

8. The active air intake grille assembly as claimed in claim 7, wherein the third connecting rod wall (3c) and the fourth connecting rod wall (3d) are arranged facing each other, and the rotating member connection portion (411) is located between the third connecting rod wall (3c) and the fourth connecting rod wall (3d).

9. The active air intake grille assembly as claimed in claim 6, wherein sliding directions (G3, G4) of the rotating member connection portion (411) on the connecting rod (3) are perpendicular to translation directions (T1, T2) of the connecting rod (3) relative to the main frame (1).

10. The active air intake grille assembly as claimed in claim 1, wherein during the process of the vane (2) rotating in the first rotation direction (S1) from the first vane position (B1) to the second vane position (B2), the vane connection portion (21) slides on the first connecting rod wall (3a) from the first connecting rod position (R1) to a first middle position (R'), and turns back at the first middle position (R') and then slides to the second connecting rod position (R2).

11. The active air intake grille assembly as claimed in claim 6, wherein during the process of the connecting rod (3) moving in the first translation direction (T1) from the first frame position (F1) to the second frame position (F2), the rotating member connection portion (411) slides on the third connecting rod wall (3c) from the fifth connecting rod position (R5) to a second middle position (R"), and turns back at the second middle position (R") and then slides to the sixth connecting rod position (R6).

12. The active air intake grille assembly as claimed in claim 6, wherein the rotating member connection portion (411) and the vane connection portion (21) are respectively arranged on two sides of the connecting rod (3).

13. A vehicle front-end module, comprising an active air intake grille assembly (90) according to any one of claims 1 to 12.
